# EUROPEAN PATENT APPLICATION

(11) **EP 4 664 818 A1**
(43) Date of publication of application: **17.12.2025**
(21) Application number: 25182372.0
(22) Date of filing: 12.06.2025
(51) Int. Cl.: H04L 9/00, H04L 9/32, G06F 9/50

(54) **METHOD AND APPARATUS FOR PROCESSING DATA**

(30) Priority: 12.06.2024 CN 202410753285
(71) Applicant: Bitdeer Semiconductor Technology PTE. LTD., 049514 Singapore (SG)
(72) Inventor: CHEN, XIN, 049514 Singapore (SG); XU, SONG, 049514 Singapore (SG); ZHANG, WEI, 049514 Singapore (SG)
(74) Representative: Metida

(57) **Abstract**

Disclosed are a method and apparatus for processing data. A computation quantity corresponding to each of computing cores is calculated based on a random number space and a total number, and an initial random number in an N-bit floating-point number form is calculated based on the computation quantity, wherein the initial random number serves as an N-bit computation offset. Corresponding N-bit computation offsets are sent to chips. Same computation task data is broadcast to all chips of a computing unit, wherein subsequent to receiving the computation task data, each of computing cores of each of the chips replaces most-significant N bits of data within the random number space with the N-bit computation offset from a register of the computing core as a starting computation value, M random numbers starting sequentially from the starting computation value within the random number space are used as M candidate computation values, each of the candidate computation values is combined with the computation task data and a hash computation is performed thereon, and a candidate computation value corresponding to a computation result that is less than a target value is sent to the control unit.

## Description

### TECHNICAL FIELD

The present disclosure relates to the technical field of computers, and in particular, relates to a method and apparatus for processing data.

### BACKGROUND

Blockchain technologies are currently finding widespread application across diverse fields or sectors. The implementation of the blockchain technologies typically requires computing units to undertake extensive computation processes. Consequently, enhancing the computation efficiency of the computing units has always been a challenge in this domain. However, the efficiency of existing computing units still requires improvement, and there is still room for reducing costs.

### SUMMARY

In view of the above, various embodiments of the present disclosure are mainly intended to provide a method and apparatus for processing data to improve the computation efficiency and reduce the costs.

To achieve the above objective, the present disclosure employs the following technical solutions:

In one aspect, the embodiments of the present disclosure provide a method for processing data. The method includes: acquiring, by a control unit, a total number of computing cores within all chips in a computing unit; calculating, by the control unit, a computation quantity corresponding to each of the computing cores based on a random number space and the total number, and calculating an initial random number in an N-bit floating-point number form based on the computation quantity for each of the computing cores, the initial random number serving as an N-bit computation offset, wherein N is less than a number of bits of the random number space; sending, by the control unit, corresponding N-bit computation offsets to the chips, wherein each of the chips receives the N-bit computation offsets of corresponding computing cores thereof, and stores the N-bit computation offsets into registers of the corresponding computing cores; and broadcasting, by the control unit, same computation task data to all the chips of the computing unit, wherein subsequent to receiving the computation task data, each of the computing cores of each of the chips replaces most-significant N bits of data within the random number space with the N-bit computation offset from the register of the computing core as a starting computation value, uses M random numbers starting sequentially from the starting computation value within the random number space as M candidate computation values, combines each of the M candidate computation values with the computation task data and performs a hash computation thereon, and sends a candidate computation value corresponding to a computation result that is less than a target value to the control unit, wherein M does not exceed the computation quantity.

In some embodiments, the control unit further broadcasts the target value to each of the chips, and an application top-layer of the each of the chips stores the target value; and a sub-target value is stored on each of the computing cores; subsequent to performing a hash computation, each of the computing cores compares a computation result with the sub-target value, and uploads a corresponding computation value as a candidate computation value to the application top-layer of the chip to which the computing core belongs in a case where the computation result is less than the sub-target value; and the application top-layer of the chip combines the candidate computation value with the computation task data and performs a hash computation, and sends a computation value corresponding to a computation result that is less than the target value to the control unit;

In some embodiments, in a case where a computing core, subsequent to performing M hash computations, still has not acquired the computation result that is less than the sub-target value, the computing core stops computation for the current computation task data and does not send a notification to the application top-layer of the chip to which the computing core belongs.

In some embodiments, the control unit is connected in series to the chips in the computing unit in sequence; the control unit numbers the computing cores within all the chips of the computing unit, and sends, to each of the chips, numbers assigned to the computing cores within the chip; and the control unit sends a corresponding N-bit computation offset to a computing core with a specific number via a chip to which the control unit is directly connected; wherein in a case where a chip receives the N-bit computation offset for the specific number, the chip determines whether the number belongs to a computing core within the chip; and in a case where the number belongs to a computing core within the chip, the chip no longer forwards the N-bit computation offset corresponding to the specific number to a next chip, and stores the N-bit computation offset for the specific number into the register of the corresponding computing core within the chip; or otherwise, the chip forwards the N-bit computation offset for the specific number to the next chip.

In some embodiments, subsequent to receiving a plurality of computation values, the control unit is further configured to combine each of the received computation values with the computation task data and performs a hash computation thereon, and send a computation value corresponding to a hash computation result that is less than the target value to an upstream entity.

In another aspect, the embodiments of the present disclosure further provide an apparatus for processing data. The device includes: a control unit and a computing unit; wherein the control unit is configured to acquire a total number of computing cores within all chips in a computing unit; the control unit is further configured to calculate a computation quantity corresponding to each of the computing cores based on a random number space and the total number, and calculate an initial random number in an N-bit floating-point number form based on the computation quantity for each of the computing cores, the initial random number serving as an N-bit computation offset; wherein N is less than a number of bits of the random number space; the control unit is further configured to send corresponding N-bit computation offsets to the chips, wherein each of the chips receives the N-bit computation offsets of corresponding computing cores thereof, and stores the N-bit computation offsets into registers of the corresponding computing cores; and the control unit is further configured to broadcast same computation task data to all the chips of the computing unit, wherein subsequent to receiving the computation task data, each of the computing cores of each of the chips replaces most-significant N bits of data within the random number space with the N-bit computation offset from the register of the computing core as a starting computation value, uses M random numbers starting sequentially from the starting computation value within the random number space as M candidate computation values, combines each of the M candidate computation values with the computation task data and performs a hash computation thereon, and sends a candidate computation value corresponding to a computation result that is less than a target value to the control unit, wherein M does not exceed the computation quantity.

In some embodiments, the control unit is further configured to broadcast the target value to each of the chips, and an application top-layer of the each of the chips stores the target value; and a sub-target value is stored on each of the computing cores; subsequent to performing a hash computation, each of the computing cores compares a computation result with the sub-target value, and uploads a corresponding computation value as a candidate computation value to the application top-layer of the chip to which the computing core belongs in a case where the computation result is less than the sub-target value; and the application top-layer of the chip combines the candidate computation value with the computation task data and performs a hash computation, and sends a computation value corresponding to a computation result that is less than the target value to the control unit;

In some embodiments, in a case where a computing core, subsequent to performing M hash computations, still has not acquired the computation result that is less than the sub-target value, the computing core stops computation for the current computation task data and does not send a notification to the application top-layer of the chip to which the computing core belongs.

In some embodiments, the control unit is connected in series to the chips in the computing unit in sequence; the control unit is further configured to number the computing cores within all the chips of the computing unit, and send, to each of the chips, numbers assigned to the computing cores within the chip; and the control unit is further configured to send a corresponding N-bit computation offset to a computing core with a specific number via a chip to which the control unit is directly connected; wherein in a case where a chip receives the N-bit computation offset for the specific number, the chip determines whether the number belongs to a computing core within the chip; and in a case where the number belongs to a computing core within the chip, the chip no longer forwards the N-bit computation offset corresponding to the specific number to a next chip, and stores the N-bit computation offset for the specific number into the register of the corresponding computing core within the chip; or otherwise, the chip forwards the N-bit computation offset for the specific number to the next chip.

In some embodiments, subsequent to receiving a plurality of computation values, the control unit is further configured to combine each of the received computation values with the computation task data and performs a hash computation thereon, and send a computation value corresponding to a hash computation result that is less than the target value to an upstream entity.

According to the above technical solutions, in one aspect, subsequent to receiving computation task data, the control unit broadcasts the computation task data to all the computing cores of the computing unit; subsequent to receiving the computation task data, each of the computing cores cooperatively performs a hash computation based on the N-bit computation offset thereof, and thus individual computation range allocation information does not need to be sent to the computing core, thereby significantly enhancing the computation efficiency. In another aspect, with the above technical solutions, each of the computing cores is only required to store the N-bit computation offset thereof, rather than storing the number of bits of the entire random number space. In this way, register resources within the computing core are greatly saved. Consequently, under equivalent conditions, the chip area and corresponding costs are reduced.

Other beneficial effects of the present disclosure are described in retail with reference to specific technical features and technical solutions in the specific embodiments. A person skilled in the art may understand the beneficial effects achieved by these technical features and technical solutions through description of these technical features and technical solutions.

### BRIEF DESCRIPTION OF THE DRAWINGS

Some embodiments of the present disclosure are described with reference to accompanying drawings hereinafter.
FIG. 1 is a schematic diagram of a computing device according to some embodiments of the present disclosure; and
FIG. 2 is a schematic diagram of a computing device according to some embodiments of the present disclosure.

### Description of embodiments

The present disclosure is described with reference to some exemplary embodiments. However, the present disclosure is not limited to these exemplary embodiments. In the detailed description of the present disclosure, specific details are set forth. To avoid unnecessarily obscuring the substance of the present disclosure, well-known methods, procedures, processes, and components have not been described in detail.

Furthermore, it should be understood by persons of ordinary skill in the art that the drawings provided herein are for illustrative purposes only and are not necessarily drawn to scale.

Unless the context clearly requires otherwise, throughout this specification and the claims, the words "comprise," "contain," and the like are to be construed in an inclusive sense, as opposed to an exclusive or exhaustive sense, that is, in the sense of "including, but not limited to."

It should be noted that terms such as "first," "second," and the like are merely used for illustration purpose during the description of the present disclosure, and shall not be understood as indicating or implying relative importance. In addition, in the description of the present disclosure, the term "multiple," "more," or "a plurality of" refers to at least two unless otherwise specified.

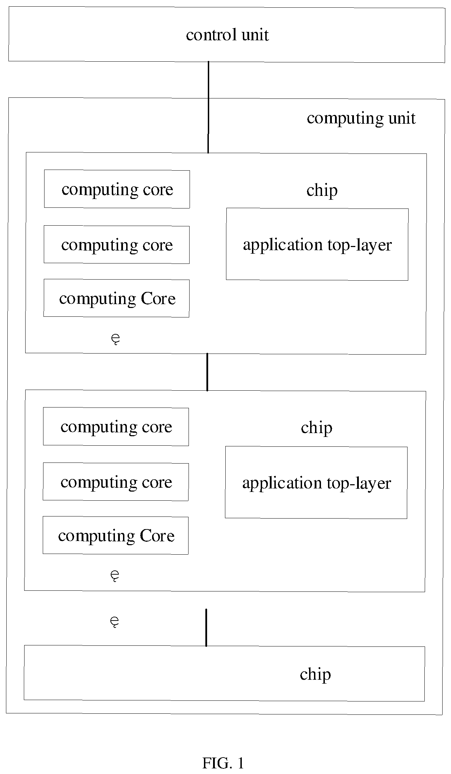

FIG. 1 is a schematic diagram of a computing device according to some embodiments of the present disclosure. The computing device may be configured to perform computation tasks related to the blockchain technology. The computing device includes a control unit (e.g., a control chip) and a computing unit (which may be referred to as a hash board). The computing unit includes a plurality of chips, wherein each of the chips has an application top-layer and a plurality of parallel-computing computing cores managed by the application top-layer. The control unit is serially connected to the chips within the computing unit. The control unit is configured to configure and control all the chips within the computing unit. Furthermore, the control unit is further configured to receive computation task data from an upstream source and broadcast the computation task data to each of the chips. Each of the chips, based on configurations for internal computing cores thereof by the control unit and the computation task data, performs a hash computation to acquire a computation result. Ultimately, a computation value corresponding to the computation result that is less than a target value is sent to the control unit.

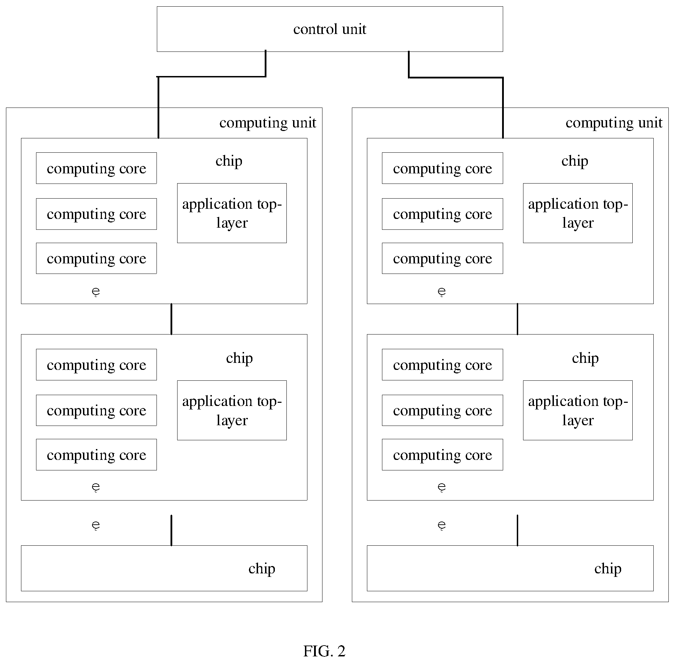

As illustrated in FIG. 1, the control unit is directly connected to one of the chips, and the chip is connected to a next chip, thereby forming a serial connection arrangement. In a case where the control unit needs to communicate with a chip to which the control unit is not directly connected, communication data is relayed through an intervening chip therebetween. FIG. 2 is a schematic diagram of a computing device according to some embodiments of the present disclosure. The computing device includes a plurality of computing units as illustrated in FIG. 1. The control unit is configured to control each of the computing units.

The control unit acquires a total number of computing cores within all chips in a computing unit. The control unit may broadcast a core quantity inquiry message to all the chips. Subsequent to receiving the core quantity inquiry message, each of the chips sends the quantity of computing cores thereof to the control unit. In this way, the control unit acquires the quantity of computing cores within each of the chips, and thus may subsequently calculate a total quantity of computing cores across all the chips.

The control unit calculates a computation quantity corresponding to each of the computing cores based on a random number space and the total number, and calculates an initial random number in an N-bit floating-point number form based on the computation quantity for each of the computing cores. The initial random number serves as an N-bit computation offset. N is less than the number of bits of the random number space. The random number space may be denoted as R. Typically, the size of the random number space R is 4 bytes (i.e., 32 bits). Subsequent hash computations require selecting an arbitrary value from the random number space R to perform computation to acquire a corresponding computation result. N may, for example, take a value of 20. Assuming that the total quantity of computing cores is denoted as m, then the computation quantity r corresponding to each of the computing cores may be expressed as: r=R/m. Thus, for a computing core identified by an index i, an initial random number N(i) thereof may be expressed as: N(i)=(i-1)*r. The initial random number N(i) is represented in an N-bit floating-point number form.

As described above, the control unit calculates a corresponding N-bit computation offset for each of the computing cores within each of the chips, and then sends corresponding N-bit computation offsets to the chips, wherein each of the chips receives the N-bit computation offsets of corresponding computing cores thereof, and stores the N-bit computation offsets into registers of the corresponding computing cores.

At this time, each of the computing cores of each of the chips acquires an N-bit computation offset thereof. The above steps are typically completed during an initialization phase of the computing unit. Thereafter, once the control unit receives computation task data, the control unit broadcasts the computation task data to all the chips of the computing unit. Subsequent to receiving the computation task data, the computing cores performs hash computations based on their corresponding N-bit computation offsets. Specifically, the control unit broadcasts same computation task data to all the chips of the computing unit. Subsequent to receiving the computation task data, each of the computing cores of each of the chips replaces most-significant N bits of data within the random number space with the N-bit computation offset from the register of the computing core as a starting computation value, uses M random numbers starting sequentially from the starting computation value within the random number space as M candidate computation values, combines each of the M candidate computation values with the computation task data and performs a hash computation thereon, and sends a candidate computation value corresponding to a computation result that is less than a target value to the control unit. M does not exceed the computation quantity. The specific computation process of each of the computing cores is described in detail hereinafter. Initially, the computing core, using a starting computation value as a computation value, combines the computation value with the computation task data, and performs a hash computation thereon. In a case where a computation result is less than the target value, a corresponding computation value is sent to the control unit. Subsequently, the computing core, using the starting computation value plus a bit 1 as a new computation value, combines the new computation value with the computation task data, and performs a hash computation thereon. In a case where a computation result is less than the target value, a corresponding new computation value is sent to the control unit. This process is repeated cyclically until the computing core generates an M^{th} computation value. The M^{th} computation value is combined with the computation task data, and a hash computation is performed thereon. In a case where a computation result is less than the target value, a corresponding computation value is sent to the control unit. In this case, the computing core has completed the computation task for the current computation task data and stops computation (or processing) related thereto. Subsequent to receiving next computation task data, the computing core then continues computation based on the subsequent computation task data. In some embodiments, the computation task data includes a plurality of fields, for example, a hash value, a version number, a timestamp, and the like of a previous block.

According to the above technical solutions, in one aspect, subsequent to receiving computation task data, the control unit broadcasts the computation task data to all the computing cores of the computing unit; subsequent to receiving the computation task data, each of the computing cores cooperatively performs a hash computation based on the N-bit computation offset thereof, and thus individual computation range allocation information does not need to be sent to the computing core, thereby significantly enhancing the computation efficiency. In another aspect, with the above technical solutions, each of the computing cores is only required to store the N-bit computation offset thereof, rather than storing the number of bits of the entire random number space. In this way, register resources within the computing core are greatly saved. Consequently, under equivalent conditions, the chip area and corresponding costs are reduced.

Subsequent to receiving a plurality of computation values, the control unit combines each of the received computation values with the computation task data and performs a hash computation thereon, and further sends a computation value corresponding to a computation result that is less than the target value to an upstream entity.

For both the processing efficiency and ease of adjusting the target value of each of chips by the control chip, in some embodiments, the following technical solutions are employed. The control unit broadcasts the target value to each of the chips, wherein an application top-layer of the each of the chips stores the target value. A sub-target value is stored on each of the computing cores. Subsequent to performing a hash computation, each of the computing cores compares a computation result with the sub-target value, and uploads a corresponding computation value as a candidate computation value to the application top-layer of the chip to which the computing core belongs in a case where the computation result is less than the sub-target value. The application top-layer of the chip combines the candidate computation value with the computation task data and performs a hash computation, and sends a computation value corresponding to a computation result that is less than the target value to the control unit. The target value is less than the sub-target value. In this technical solution, each of the computing cores stores a sub-target value. This configuration enables computing circuitry of the computing core to rapidly compare a computation result with the sub-target value, and hence computation results that exceed the sub-target value are discarded. Consequently, the transmission of a voluminous quantity of computation results to the application top-layer of the chip is avoided, which mitigates the computation load on the application top-layer, and enhances the processing efficiency of the application top-layer. Furthermore, in a case where the difficulty coefficient of the computation task data increases (i.e., the target value decreases), the control unit may send the new target value to the application top-layer of each of the chips. This facilitates the adjustment of the computation target for each of the chips.

In some embodiments, in a case where a computing core, subsequent to performing M hash computations, still has not acquired the computation result that is less than the sub-target value, the computing core stops computation for the current computation task data (and continues computation for next computation task data subsequent to receiving the next computation task data) and does not send a notification to the application top-layer of the chip to which the computing core belongs. This avoids occupation of bus resources caused due to sending a notification to the application top-layer upon each computation.

In some embodiments, the control unit is further configured to number the computing cores within all the chips of the computing unit, and send, to each of the chips, assigned numbers of the computing cores within the chip; and the control unit is further configured to send a corresponding N-bit computation offset to a computing core with a specific number via a chip to which the control unit is directly connected; wherein in a case where a chip receives the N-bit computation offset for the specific number via an application top-layer thereof, the chip determines whether the number belongs to a computing core within the chip; and in a case where the number belongs to a computing core within the chip, the chip no longer forwards the N-bit computation offset corresponding to the specific number to a next chip, and stores the N-bit computation offset for the specific number into the register of the corresponding computing core within the chip; or otherwise, the chip forwards the N-bit computation offset for the specific number to the next chip. Specifically, the control unit stores a number assigned to each of the chips. In a case where the chip has reported the quantity of respective computing cores thereof to the control unit, the control unit assigns a unique number to each of the computing cores across all the chips based on the total quantity of computing cores. Subsequently, the control unit sends, to each of the chips, the numbers assigned to the computing cores within the chip. The application top-layer of the chip stores the numbers subsequent to receiving the numbers assigned to the computing cores. In a case where the control unit needs to send an N-bit computation offset to a specific computing core within a specific chip, the control unit first sends a data packet containing the number of the computing core and the N-bit computation offset to a first chip that is directly connected to the control unit. Subsequent to receiving the data packet, the application top-layer of the first chip interrogates the number of the computing core contained therein to determine whether the number corresponds to any of the computing cores within the current chip. In a case where a correspondence is found, the N-bit computation offset is written into the register of the corresponding computing core. Otherwise, the application top-layer forwards the data packet to a next chip. This forwarding process continues until the data packet is received by the target chip.

The present disclosure further provides an apparatus for processing data. The apparatus includes a control unit and a computing unit.

The control unit is configured to acquire the total number of computing cores within all chips in a computing unit.

The control unit is further configured to calculate a computation quantity corresponding to each of the computing cores based on a random number space and the total number, and calculate an initial random number in an N-bit floating-point number form based on the computation quantity for each of the computing cores, the initial random number serving as an N-bit computation offset; wherein N is less than a number of bits of the random number space.

The control unit is further configured to send corresponding N-bit computation offsets to the chips, wherein each of the chips receives the N-bit computation offsets of corresponding computing cores thereof, and stores the N-bit computation offsets into registers of the corresponding computing cores.

The control unit is further configured to broadcast same computation task data to all the chips of the computing unit, wherein subsequent to receiving the computation task data, each of the computing cores of each of the chips replaces most-significant N bits of data within the random number space with the N-bit computation offset from the register of the computing core as a starting computation value, uses M random numbers starting sequentially from the starting computation value within the random number space as M candidate computation values, combines each of the M candidate computation values with the computation task data and performs a hash computation thereon, and sends a candidate computation value corresponding to a computation result that is less than a target value to the control unit, wherein M does not exceed the computation quantity.

A person skilled in the art would understand that the above technical solutions may be freely combined and superimposed as long as no conflicts exist. The flowcharts and block diagrams in the accompanying drawings illustrate possibly practicable system architecture, functions and operations of the system, method and computer program product according to various embodiments of the present disclosure. Based on this, each block in the flowcharts or block diagrams may represent a module, a program segment or a portion of the code. The module, the program segment or the portion of the code includes one or a plurality of executable instructions for implementing specified logic functions. It should be noted that in some alternative implementations, the functions specified in the blocks may also be implemented in a sequence different from that specified in the accompanying drawings. For example, two continuous blocks may be practically performed substantially parallelly, and sometimes may be performed in a reverse sequence, which depends on the involved functions. It should also be noted that each block in the block diagrams and/or flowcharts and a combination of the blocks of the block diagrams and/or flowcharts may be implemented by using a dedicated hardware-based system for implementing the specified functions or operations, or may be implemented by using a combination of dedicated hardware and computer instructions. The numbering of the various steps herein is for convenience of description and reference only, and is not intended to limit the order thereof. The specific execution order is determined by the technology itself, and a person skilled in the art may determine various permissible and reasonable orders based on the technology.

A person skilled in the art would understand that the above technical solutions may be freely combined and superimposed as long as no conflicts exist.

It should be understood that the above embodiments are only exemplary, and construe no limitations. Under the circumstance of not departing from the basic principles of the present disclosure, various obvious or equivalent modifications or substitutions that persons skilled in the art may derive to the above-described details are all included within the scope of the claims of the present disclosure.

## Claims

1. A method for processing data, comprising:
acquiring, by a control unit, a total number of computing cores within all chips in a computing unit;
calculating, by the control unit, a computation quantity corresponding to each of the computing cores based on a random number space and the total number, and calculating an initial random number in an N-bit floating-point number form based on the computation quantity for each of the computing cores, the initial random number serving as an N-bit computation offset, wherein N is less than a number of bits of the random number space;
sending, by the control unit, corresponding N-bit computation offsets to the chips, wherein each of the chips receives the N-bit computation offsets of corresponding computing cores thereof, and stores the N-bit computation offsets into registers of the corresponding computing cores; and
broadcasting, by the control unit, same computation task data to all the chips of the computing unit, wherein subsequent to receiving the computation task data, each of the computing cores of each of the chips replaces most-significant N bits of data within the random number space with the N-bit computation offset from the register of the computing core as a starting computation value, uses M random numbers starting sequentially from the starting computation value within the random number space as M candidate computation values, combines each of the M candidate computation values with the computation task data and performs a hash computation thereon, and sends a candidate computation value corresponding to a computation result that is less than a target value to the control unit, wherein M does not exceed the computation quantity.

2. The method according to claim 1, wherein
the control unit further broadcasts the target value to each of the chips, and an application top-layer of the each of the chips stores the target value; and
a sub-target value is stored on each of the computing cores; subsequent to performing a hash computation, each of the computing cores compares a computation result with the sub-target value, and uploads a corresponding computation value as a candidate computation value to the application top-layer of the chip to which the computing core belongs in a case where the computation result is less than the sub-target value; and the application top-layer of the chip combines the candidate computation value with the computation task data and performs a hash computation, and sends a computation value corresponding to a computation result that is less than the target value to the control unit;
wherein the target value is less than the sub-target value.

3. The method according to claim 2, wherein
in a case where a computing core, subsequent to performing M hash computations, still has not acquired a computation result that is less than the sub-target value, the computing core stops computation for the current computation task data and does not send a notification to the application top-layer of the chip to which the computing core belongs.

4. The method according to claim 2, wherein
the control unit is connected in series to the chips in the computing unit in sequence;
the control unit numbers the computing cores within all the chips of the computing unit, and sends, to each of the chips, numbers assigned to the computing cores within the chip; and
the control unit sends a corresponding N-bit computation offset to a computing core with a specific number via a chip to which the control unit is directly connected; wherein in a case where a chip receives the N-bit computation offset for the specific number, the chip determines whether the number belongs to a computing core within the chip; and in a case where the number belongs to a computing core within the chip, the chip no longer forwards the N-bit computation offset corresponding to the specific number to a next chip, and stores the N-bit computation offset for the specific number into the register of a corresponding computing core within the chip; or otherwise, the chip forwards the N-bit computation offset for the specific number to the next chip.

5. The method according to claim 1, wherein
subsequent to receiving a plurality of computation values, the control unit combines each of the received computation values with the computation task data and performs a hash computation thereon, and sends a computation value corresponding to a computation result that is less than the target value to an upstream entity.

6. An apparatus for processing data, comprising: a control unit and a computing unit; wherein
the control unit is configured to acquire a total number of computing cores within all chips in a computing unit;
the control unit is further configured to calculate a computation quantity corresponding to each of the computing cores based on a random number space and the total number, and calculate an initial random number in an N-bit floating-point number form based on the computation quantity for each of the computing cores, the initial random number serving as an N-bit computation offset; wherein N is less than a number of bits of the random number space;
the control unit is further configured to send corresponding N-bit computation offsets to the chips, wherein each of the chips receives the N-bit computation offsets of corresponding computing cores thereof, and stores the N-bit computation offsets into registers of the corresponding computing cores; and
the control unit is further configured to broadcast same computation task data to all the chips of the computing unit, wherein subsequent to receiving the computation task data, each of the computing cores of each of the chips replaces most-significant N bits of data within the random number space with the N-bit computation offset from the register of the computing core as a starting computation value, uses M random numbers starting sequentially from the starting computation value within the random number space as M candidate computation values, combines each of the M candidate computation values with the computation task data and performs a hash computation thereon, and sends a candidate computation value corresponding to a computation result that is less than a target value to the control unit, wherein M does not exceed the computation quantity.

7. The apparatus according to claim 6, wherein
the control unit is further configured to broadcast the target value to each of the chips, wherein an application top-layer of the each of the chips stores the target value; and
a sub-target value is stored on each of the computing cores; subsequent to performing a hash computation, each of the computing cores compares a computation result with the sub-target value, and uploads a corresponding computation value as a candidate computation value to the application top-layer of the chip to which the computing core belongs in a case where the computation result is less than the sub-target value; and the application top-layer of the chip combines the candidate computation value with the computation task data and performs a hash computation, and sends a computation value corresponding to a computation result that is less than the target value to the control unit;
wherein the target value is less than the sub-target value.

8. The apparatus according to claim 7, wherein
in a case where a computing core, subsequent to performing M hash computations, still has not acquired a computation result that is less than the sub-target value, the computing core stops computation for the current computation task data and does not send a notification to the application top-layer of the chip to which the computing core belongs.

9. The apparatus according to claim 7, wherein
the control unit is connected in series to the chips in the computing unit in sequence;
the control unit is further configured to number the computing cores within all the chips of the computing unit, and send, to each of the chips, numbers assigned to the computing cores within the chip; and
the control unit is further configured to send a corresponding N-bit computation offset to a computing core with a specific number via a chip to which the control unit is directly connected; wherein in a case where a chip receives the N-bit computation offset for the specific number, the chip determines whether the number belongs to a computing core within the chip; and in a case where the number belongs to a computing core within the chip, the chip no longer forwards the N-bit computation offset corresponding to the specific number to a next chip, and stores the N-bit computation offset for the specific number into the register of a corresponding computing core within the chip; or otherwise, the chip forwards the N-bit computation offset for the specific number to the next chip.

10. The apparatus according to claim 6, wherein
subsequent to receiving a plurality of computation values, the control unit is further configured to combine each of the received computation values with the computation task data and performs a hash computation thereon, and send a computation value corresponding to a hash computation result that is less than the target value to an upstream entity.
